**Europäisches Patentamt**

**European Patent Office**

**Office européen des brevets**

(19)

(11) Veröffentlichungsnummer: **0 012 346**
**A1**

(12)

# EUROPÄISCHE PATENTANMELDUNG

(21) Anmeldenummer: **79104932.3**

(22) Anmeldetag: **05.12.79**

(51) Int. Cl.³: **C 01 B 33/28**, C 11 D 3/08,
B 01 F 17/00

(30) Priorität: **16.12.78 DE 2854484**

(43) Veröffentlichungstag der Anmeldung: **25.06.80**
**Patentblatt 80/13**

(84) Benannte Vertragsstaaten: **BE DE FR GB IT NL**

(71) Anmelder: **BAYER AG, Zentralbereich Patente, Marken
und Lizenzen, D-5090 Leverkusen 1, Bayerwerk (DE)**

(72) Erfinder: **Mansmann, Manfred, Dr.,
Oskar-Schlemmer-Strasse 2, D-5090 Leverkusen 1 (DE)**
Erfinder: **Puppe, Lothar, Dr.,
Gisbert-Cremer-Strasse 45 A, D-5090 Leverkusen 1 (DE)**

(54) **Stabile wässrige Zeolith-Suspensionen, Verfahren zu ihrer Herstellung und ihre Verwendung.**

(57) Die vorliegende Erfindung betrifft stabile wässrige Zeolith-Suspensionen, die durch einen Gehalt an einem organischen Flockungsmittel wie Polyacrylamid und/oder Acrylamid/Acrylsäure-Copolymerisate gekennzeichnet sind. Die Erfindung betrifft ferner ein Verfahren zur Herstellung derartiger Suspensionen sowie deren Verwendung bei der Herstellung von Wasch- und Reinigungsmitteln.

EP 0 012 346 A1

BAYER AKTIENGESELLSCHAFT          5090 Leverkusen,Bayerwerk
                                  Br-by
Zentralbereich
Patente, Marken und Lizenzen

BEZEICHNUNG GEÄNDERT
    siehe Titelseite

Stabile wäßrige Zeolith-Suspensionen

Die vorliegende Erfindung betrifft stabile wäßrige
Zeolith-Suspensionen sowie ein Verfahren zu deren
Herstellung. Der suspendierte, feinteilige Zeolith
ist geeignet zur Verwendung als Sequestrierungsmittel in Wasch- und Reinigungspulvern.

In verschiedenen Publikationen wurde vorgeschlagen, in
Wasch- und Reinigungsmitteln die Phosphat-Builder teilweise durch Zeolithe zu ersetzen. Zeolithe, insbesondere
Zeolith A, wie er aus der deutschen Patentschrift
1 038 017 seit langem bekannt ist, haben bekanntermaßen gute Ionenaustausch-Eigenschaften für Calciumionen (7,0 meq/g wasserfreier Substanz für Zeolith A,
S. D.W. Breck, Zeolite, Molecular Sieves, John Wiley
& Sons, New York, 1974, S. 537). Deshalb können Zeolithe
die Rolle des Tripolyphosphats als Calciumbindungsreagenz in Wasch- und Reinigungsmitteln übernehmen.

Bei der Herstellung der entsprechenden zeolithhaltigen
Wasch- oder Reinigungsmittel lassen sich die Zeolithe

Le A 19 321

- 2 -

beispielsweise trocken unter das fertige Wasch- oder Reinigungspulver mischen. Unter einem trockenen Zeolithpulver versteht man hierbei ein Material, das ca. 16 bis 25 Gew.-% Wasser adsorptiv gebunden enthält.

Dieses Herstellungsverfahren zeolithhaltiger Waschmittel ist für moderne Waschmittelproduktionen, bei denen das fertige Produkt aus einem Slurry, der die meisten Waschmittelbestandteile enthält, über einen Sprühtrockenturm zu einem körnigen Pulver verarbeitet wird, oft nicht vorteilhaft.

Es ist vielmehr zweckmäßig, den Zeolith-Anteil direkt in den Waschmittelslurry zu geben, um eine homogene Verteilung des Produktes im Waschpulver zu erreichen. Hierdurch wird es möglich, Zeolith-Suspensionen für die Waschmittelproduktion einzusetzen. Die Zeolith-Suspensionen können nun vorteilhaft aus dem Produktionsprozeß noch Alkali enthalten, im wesentlichen in Form von NaOH. Die Natronlauge-haltige Zeolith-Suspension kann dazu dienen, einen Teil des bei der Waschmittelproduktion benötigten Alkalis zu liefern. Den Alkaligehalt einer Zeolith-Suspension stellt man direkt nach der Synthese des Zeoliths durch die unterschiedlichen Möglichkeiten der Aufarbeitung auf die gewünschte Menge ein.

Zeolith A läßt sich bekannterweise durch geeignete Syntheseführung, wie z.B. Variation in der Temperatur,

Le A 19 321

Konzentration der Komponenten und Rührgeschwindigkeit, mit verschiedenen Teilchengrößenverteilungen herstellen (vgl. z.B. DE-AS 1 667 620). In der Regel erhält man bei der Zeolith A-Synthese im Durchschnitt Teilchen, deren Durchmesser im Bereich zwischen 1,0 und 10 Mikron liegen. Bei der Verwendung von Meta-Kaolin, einem Kaolin, der oberhalb 550°C geglüht worden ist, zur Zeolith A-Herstellung erhält man bevorzugt ein Material, das ohne Gritanteile sehr feinteilig anfällt (US-PS 3 185 544).

Bei der Verarbeitung von Zeolith-Suspensionen in der Waschmittelproduktion ist es nun aus technischen Gründen erforderlich, daß derartige wäßrige Suspensionen in Vorratsbehältern gelagert werden können. Bleiben wäßrige Zeolith-Suspensionen längere Zeit, d.h. mehrere Stunden bis zu einigen Wochen, stehen, so bilden sich Bodenkörper, die, wenn überhaupt, nur mit großem Energieaufwand wieder aufgerührt werden können. Daher ist es notwendig, daß man stabile Zeolith-Suspensionen verwendet, die keine oder nur eine sehr geringe Neigung zum Absetzen zeigen, damit bei der Lagerung bzw. beim Transport derartiger Suspensionen keine technischen Schwierigkeiten auftreten. Zum Transport gehört auch das mechanische Fördern mit Hilfe von geeigneten Pumpaggregaten sowie die Beförderung in Tankbehältern.

Die Geschwindigkeit des Absitzens eines Feststoffes in einer Suspension hängt naturgemäß von der Teilchengröße des betreffenden Feststoffes ab. Ebenso hat der Elektrolytgehalt einen wesentlichen Einfluß auf das

Le A 19 321

- 4 -

Absetzverhalten. In der Regel setzt man Feststoffsuspensionen Dispergiermittel zu, um eine Agglomeration,
und damit verbunden ein schnelles Absitzen der feinen
Teilchen zu verhindern (vgl. DE-AS 2 527 388).

Suspensionen mit Dispergiermittel-Zusatz zeigen jedoch eine immer noch nicht ausreichende Stabilität,
da sich nach einer Standzeit von wenigen Stunden bereits wieder ein schwer aufrührbarer Bodensatz bildet.
So erhält man beispielsweise mit Dispergiermitteln
auf Basis von niedermolekularen Polyacrylaten mit Molekulargewichten von 500 bis 1500 Suspensionen, deren
Absetzvolumen sogar noch kleiner ist als bei der
Suspension ohne jeglichen Zusatz (vgl. Beispiele,
Tabelle 1).

Ebenfalls nicht voll befriedigend hinsichtlich ihrer
Stabilität sind Suspensionen, die als Zusätze Dispergiermittel enthalten, die zur Gruppe der Phosphor-
bzw. Phosphonsäuren sowie deren Salzen, zur Gruppe
der Carbonsäuren bzw. deren Salze und zur Gruppe der
quarternären Ammoniumverbindungen gehören. Weiterhin
sind Dispergiermittel auf Basis oxäthylierter Fettalkohole oder oxäthylierter Alkylphenole wenig gut
geeignet.

Gegenstand der vorliegenden Erfindung sind nun stabile
wäßrige Zeolith-Suspensionen, welche dadurch gekennzeichnet sind, daß sie ein organisches Flockungshilfsmittel enthalten.

Le A 19 321

- 5 -

Es wurde überraschenderweise gefunden, daß der Zusatz von geringen Mengen an Flockungshilfsmittel eine sehr gute Wirkung hinsichtlich einer Stabilisierung von wäßrigen Zeolith-Suspensionen zeigt.

Derartige Flockungshilfsmittel sind an sich bekannte hochpolymere Produkte, die technisch dazu benutzt werden, feinteilige Feststoffe auszuflocken, um eine gute Abtrennung des Feststoffes von der flüssigen Phase zu ermöglichen. Dabei setzt man Suspensionen mit niedrigen Feststoffgehalten ein (vgl. z.B. Glückauf 112 (1976) No. 3, S. 122).

Um eine wirtschaftlich günstige hohe Raumausnutzung zu erzielen, sind hohe Feststoffgehalte in den Zeolith-Suspensionen erforderlich. Hierbei muß natürlich die Rührbarkeit und Pumpfähigkeit derartiger Suspensionen erhalten bleiben. In der Regel lassen sich Feststoffgehalte von 15 bis zu 50 Gew.-% Zeolith (berechnet als wasserfreies Material) erzielen. Dabei ist der Alkaligehalt der wäßrigen Phase neben der Teilchengrößenverteilung des Feststoffes von großer Bedeutung. Bevorzugt werden Feststoffgehalte von 20 bis 40 Gew.-%.

Als geeignete Flockungshilfsmittel haben sich Substanzen auf Basis Polyacrylamid mit hohen Molekulargewichten, bevorzugt oberhalb 3 Millionen, erwiesen. Übliche Handelsprodukte, z.B. Praestole[R] der Fa. Chem. Fabrik Stockhausen u. Cie, Krefeld, besitzen Molekulargewichte von 5 bis 15 Millionen. Diese Produkte sind wasserlösliche Polymerisate, die sich außer im Molekulargewicht weiterhin in der Art und im Grad ihrer Ionogenität in

Le A 19 321

- 6 -

wäßriger Lösung unterscheiden. Kationaktive Polymerisate sind aufgrund der hohen pH-Werte der wäßrigen, alkalischen Zeolith-Suspensionen weniger gut geeignet.

Die erfindungsgemäß eingesetzten Flockungshilfsmittel bestehen aus Polyacrylamiden bzw. Acrylamid-Acrylsäure-Copolymerisaten und deren Salze. Das Verhältnis von Acrylamid zu Acrylsäure in den Copolymerisaten kann dabei beliebige Werte zwischen 0:1 und 1:0 annehmen, wobei Molverhältnisse von Acrylamid zu Acrylsäure von $\geq 1$ bevorzugt sind. Die Neutralisation der Carboxylgruppen des Copolymerisats durch Salzbildung beeinträchtigt nicht die Wirksamkeit der Produkte. Als Salze kommen die Li-, Na-, K-, bzw. $NH_4$-Verbindungen in Frage.

Als besonders gut geeignet erweisen sich Polymerisate mit Molekulargewichten von 3-10 Millionen und einem Acrylatanteil von 20 bis 50 %. Hierbei erhält man Suspensionen, die noch nach mehreren Wochen keine Bodensatzbildung aufweisen.

Zweckmäßigerweise werden die Flockungshilfsmittel, die zur Herstellung der erfindungsgemäßen Suspensionen verwendet werden, vor ihrem Einsatz in Wasser gelöst. Man stellt vorteilhaft eine ca. 1 %ige Vorratslösung her, von der man die entsprechende Menge zu der zu stabilisierenden Zeolith-Suspension gibt. Geeignete Zusatzmengen betragen 0,01 bis 5 Gew.-%, wobei besonders geeignet sind 0,05 bis 2 Gew.-%, bezogen auf den Feststoff in der Suspension.

Le A 19 321

Anhand der nachfolgenden Beispiele soll der Einfluß der erfindungsgemäßen Zusätze auf das Absetzverhalten wäßriger Zeolith-Suspensionen gezeigt werden. Dabei sind die Bodensätze in den Beispielen 1, 9 und 10 nur sehr schwer wieder in der überstehenden Flüssigkeit zu verteilen, während bei den übrigen Beispielen kein eigentlicher Bodensatz ausgebildet wird.

Le A 19 321

Tabelle 1

| Beispiel | Zusatz | | Molekulargewicht | Ionogenität | Anteil Acrylatgruppen | Konzentration Gew-[%] [a] | Absetzvolumen [b] |
|---|---|---|---|---|---|---|---|
| 1 | – | | – | – | – | – | 70 |
| 2 | Polyacrylat | 1 | <15 Mio | anionisch | 20 % | 0,6 | 89 |
| 3 | " | 2 | < 10 Mio | " | 20 % | 0,6 | 94 |
| 4 | " | 3 | < 5 Mio | " | 10 % | 0,6 | 89 |
| 5 | " | 4 | < 3 Mio | " | 50 % | 0,6 | 94 |
| 6 | " | 5 | < 5 Mio | " | 20 % | 0,6 | 99 |
| 7 | " | 6 | < 5 Mio | " | 33 % | 0,6 | 99 |
| 8 | " | 7 | < 5 Mio | nicht ionisch | – | 0,6 | 92 |
| 9 | " | 8 | 500–1500 | | | 0,6 | 63 |
| 10 | " | 9 | 500–1500 | | | 0,6 | 66 |
| 11 | Polyacrylat | 4 | < 3 Mio | anionisch | 50 % | 0,3 | 90 |
| 12 | " | 6 | < 5 Mio | " | 33 % | 0,3 | 94 |
| 13 | " | 7 | < 5 Mio | nicht ionisch | – | 0,3 | 92 |

a) bezogen auf den Feststoffgehalt

b) nach 20 Tagen Standzeit in % von Gesamtvolumen der Suspension

- 9 -

Beispiel 1 (Vergleich):

Für das Vergleichsbeispiel einer Zeolith-Suspension ohne
Zusatz wurden 35 g Zeolith A mit 65 g Wasser angeschlämmt
und 20 Tage stehen gelassen. Es bildete sich ein Bodensatz mit einem Volumen von ca. 70 %, bezogen auf das
Gesamtvolumen der Suspensionen (s. Tab. 1).

Beispiele 2-8

Jeweils 35 g Zeolith A werden mit 65 g Wasser angeschlämmt.
Zu dieser Suspension gibt man 0,2 g des jeweiligen Polyacrylamids in einer wäßrigen Lösung. Nach 20 Tagen Standzeit hatte sich über dem Feststoff eine klare Flüssigkeitszone gebildet, die zwischen 1 und 11 % des Gesamtvolumens
der Suspension einnahm (s. Tab. 1).

Beispiele 9-10 (Vergleich):

Sind Vergleichsbeispiele für die geringe Wirksamkeit
von Dispergiermitteln auf Basis Polyacrylat mit niedrigen
Molekulargewichten.

Jeweils 35 g Zeolith A werden mit 65 g Wasser angeschlämmt
und mit 0,2 g Polyacrylat in einer 1 Gew.-%igen wäßrigen
Lösung versetzt. Der Bodensatz, der sich nach 20 Tagen
gebildet hat, liegt mit 63 bis 66 % Volumen deutlich
unter dem Wert für eine Suspension ohne Zusatz (s. Tab. 1).

Le A 19 321

Beispiele 11-13

Jeweils 35 g Zeolith A werden mit 65 g Wasser angeschlämmt und mit 0,1 g Polyacrylamid versetzt, das
zuvor in einer Konzentration von 1 Gew.-% als wäßrige
Lösung hergestellt wurde. Nach 20 Tagen Standzeit
hatte sich ein Absetzvolumen von 90 bis 94 % gebildet
(s. Tab. 1).

Le A 19 321

- 11 -

<u>Patentansprüche</u>

1. Stabile wäßrige Zeolith-Suspensionen, gekennzeichnet durch einen Gehalt an organischem Flockungsmittel.

2. Suspensionen gemäß Anspruch 1, dadurch gekennzeichnet, daß sie als Flockungsmittel Polyacrylamid und/oder Acrylamid/Acrylsäure-Copolymerisat enthalten.

3. Suspensionen gemäß Anspruch 1 oder 2, dadurch gekennzeichnet, daß sie 0,01 bis 5 Gew.-% des Flockungsmittels enthalten.

4. Suspensionen gemäß einem der Ansprüche 1 bis 3, dadurch gekennzeichnet, daß der Feststoffgehalt der Suspension mindestens 15 Gew.-% beträgt.

5. Verfahren zur Herstellung einer stabilen wäßrigen Zeolith-Suspension, dadurch gekennzeichnet, daß man der Suspension ein organisches Flockungsmittel zusetzt.

6. Verwendung von Suspensionen gemäß einem der Ansprüche 1 bis 4 zur Herstellung von Wasch- und Reinigungsmitteln.

<u>Le A 19 321</u>

**Europäisches Patentamt**

# EUROPÄISCHER RECHERCHENBERICHT

0012346

Nummer der Anmeldung

EP 79 104 932.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 502 012 (CALGON)<br>* Ansprüche 1, 2 *<br>-- | 1,2,<br>5 |
| | DE - B2 - 2 354 432 (HENKEL & CIE et al.)<br>* Ansprüche 1, 2 *<br>-- | 1,2,<br>5,6 |
| | US - A - 3 085 916 (W.E. ZIMMIE et al.)<br>* Ansprüche 1, 6 *<br>-- | 1,2,<br>5 |
| D | DE - B2 - 2 527 388 (HENKEL KG)<br>-- | |
| D | DE - B2 - 1 667 620 (MARTINSWERK)<br>-- | |
| D | US - A - 3 185 544 (P.K. MAHER)<br>-- | |
| A | ENCYCLOPEDIA OF POLYMER SCIENCE AND TECHNOLOGY, Vol. 1, 1968 Seiten 191 bis 192<br>---- | |

**KLASSIFIKATION DER ANMELDUNG (Int.Cl.³)**

C 01 B   33/28
C 11 D     3/08
B 01 F   17/00

**RECHERCHIERTE SACHGEBIETE (Int. Cl.³)**

B 01 F   17/00
B 01 F   17/22
C 01 B   33/26
C 01 B   33/28
C 11 D     3/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 03-03-1980 | KESTEN |

EPA form 1503.1  06.78